# EUROPEAN PATENT SPECIFICATION

(11) **EP 0 503 767 B1**
(45) Date of publication and mention of the grant of the patent: **03.05.1995**
(21) Application number: 92301114.2
(22) Date of filing: 11.02.1992
(51) Int. Cl.: A24F 47/00

(54) **Flavor generating article**
Aromaerzeugende Artikel
Article délivrant un arôme

(30) Priority: 11.03.1991 US 666926
(43) Date of publication of application: 16.09.1992
(73) Proprietor: Philip Morris Products Inc., Richmond Virginia 23234 (US)
(72) Inventor: Morgan, Constance H., Midlothian, Virginia 23112 (US); Nichols, Walter A., Richmond, Virginia 23235 (US)
(74) Representative: Lloyd, Patrick Alexander Desmond

(56) References cited:
- EP-A- 0 358 002
- EP-A- 0 430 566
- EP-A- 0 438 862
- WO-A-86/02528
- US-A- 3 200 819

## Description

This invention relates to articles in which flavor generating media are heated but not burned to release tobacco flavors. More particularly, this invention relates to electrically heated articles, as disclosed in the first part of claim 1 relating to the prior art of WO 86/02528.

An electrically heated flavor generating article is described in copending European Patent Application EP-A-0430566 claiming priority from commonly-assigned United States patent application Serial No: 07/444,746, filed December 1, 1989, which is hereby incorporated by reference of art, 54(3) and (4) EPC. That application describes an electrically heated flavor generating article which is provided with a disposable set of electrical heating elements on each of which is deposited an individual charge of flavor generating medium containing, for example, tobacco or tobacco-derived material. The disposable heater/flavor unit is mated to a more or less permanent unit containing a source of electrical energy such as a battery or capacitor, as well as control circuitry to actuate the heating elements in response to a puff by a consumer on the article or the depression of a manual switch. The circuitry is designed so that at least one but less than all of the heating elements are actuated for any one puff, so that a pre-determined number of puffs, each containing a premeasured amount of flavor-containing substance, is delivered to the consumer. The circuitry also preferably prevents the actuation of any particular heater more than once, to prevent overheating of the flavor generating medium thereon and consequent production or undesired compounds yielding off tastes.

In such an article, the heating elements are disposed of along with the spent flavor generating medium. This results in increased costs to the consumer, who must buy new heating elements with each refill of flavor generating medium. The volume of material disposed of is also greater when the heating elements must be disposed of.

In addition, when the heating elements are not permanently attached to the article, there is sometimes excessive contact resistance where the removable heaters are electrically connected to the source of electrical energy, resulting in increased power consumption.

Also, when the heating elements are disposable, the resistance may vary from heater to heater, resulting in variations in power consumption which in turn lead to variations in temperature. As it is the temperature to which the flavor generating medium is heated that determines the characteristics of the flavor containing substance, those characteristics will also vary.

The present invention aims to overcome the above mentioned disadvantages with the article described in EP-A-0430566 and accordingly provides an article for delivering to a consumer an inhalable flavor-containing substance, comprising a plurality of electrical heating means disposed in a cavity, a source of electrical energy for powering the electrical heating means, control means for controlling the heating of the electrical heating means by the source to heat at any one of a pre-determined number of times, at least one but fewer than all of the electrical heating means, and a removable portion of flavor generating medium received in the cavity in proximity to the plurality of electrical heating means, whereby on activation of any one of the electrical heating means a respective fraction of the removable portion of flavor generating medium in contact therewith is heated, delivering a predetermined quantity of flavor-containing substance to the consumer.

An article embodying the invention has the advantage of reusable heating elements and the further advantage that all disposable portions are biodegradable.

An article embodying the invention may have the further advantage that electrical contact resistance between the heaters and the source of electrical energy is minimized, and the advantage that variations from use to use in the temperature of the heating elements is minimized.

Preferred and advantageous features are defined in the sub-claims to which reference should be made.

Embodiments of the invention will now be described, by way of example and with reference to the accompanying drawings, in which:
Figure 1 is a perspective view of a flavor generating article embodying the invention;
Figure 2 is a partially fragmentary, exploded perspective view of the flavor generating article of Figure 1;
Figure 3 is a radial cross-sectional view of the flavor generating articles of FIGS. 1 and 2, taken from line 3-3 of Figure 2;
Figure 3A is radial cross-sectional view of the flavor generating article of Figures 1-3, taken from line 3A-3A of Figure 1;
Figure 4 is a longitudinal cross-sectional view of the flavor cartridges received cavity of the flavor generating article of Figures 1-3A, taken from line 4-4 of Figure 3;
Figure 5 is a radial cross-sectional view similar to Figure 3 showing an alternative heater embodiment;
Figure 6 is a longitudinal cross-sectional view of the flavor cartridge receiving cavity of the flavor generating article of Figure 5, taken from line 6-6 of Figure 5;
Figure 7 is a radial crossectional view similar to Figures 3 and 5 showing another alternative heater embodiment;
FIG. 8 is a longitudinal cross-sectional view of the flavor cartridge receiving cavity of the flavor generating article of FIG. 7, taken from line 8-8 of FIG. 7;
FIG. 9 is a perspective view of an alternative embodiment of a flavor cartridge embodying the invention; and
FIG. 10 is an end elevational view of the flavor cartridge of FIG. 9, taken from line 10-10 of FIG. 9.

A flavor generating article according to the present invention can be used, for example, to simulate a cigarette. In such a case, the flavor generating medium would be a material containing tobacco or tobacco derivatives. In accordance with the invention, the flavor generating article would include a removable disposable portion which included the flavor generating medium and, if desired, a filter, and a reusable "permanent" portion including a source of electrical energy, a set of reusable heating elements, and control circuitry for energizing the heaters in an appropriate sequence, in response to manual actuation or puff-induced actuation. Suitable control circuitry is described in EP-A-0430566 referred to above.

The reusable or permanent portion includes a cavity at the mouth end thereof for insertion of the disposable portion. The reusable heaters are disposed in the cavity in such a way that they make thermal contact with the disposable portion when the disposable portion is inserted into the cavity. This can be accomplished by having the heaters protrude from the sides of the cavity and making the disposable portion compressible, so that the heaters press into the material. Alternatively, the heaters can protrude from the end of the cavity, so that they actually pierce and extend into the disposable portion.

When reusable heaters are used, it is important that they be cleaned before each use. Otherwise, residues from the previous use, which might include partially oxidized, pyrolized or thermally decomposed constituents of the flavor generating medium, might be reheated, possibly giving rise to undesired compounds and off tastes being delivered to the consumer. Such residues are not of concern when the heaters are part of the disposable portion because they are never reheated, but may be of concern where reusable heaters are provided. In the present invention, the cleaning of the heaters is accomplished by the wiping action of the disposable portion against the heaters as the disposable portion is inserted. Thus the insertion end of the disposable portion pushes any residues on the heater surfaces toward the mouth end of the cavity, to, and preferably past, the ends of the heaters. For this reason, the disposable portion, while compressible, should be relatively firm, and the heaters should preferably have a smooth surface finish to assure that the wiping action is effective.

The parameters of the heaters are chosen to allow delivery of an effective amount of flavor-containing substance -- e.g., an aerosol containing tobacco flavors -- to the consumer under standard conditions of use. For example, it may be desirable to deliver 2 mg of aerosol to a consumer during a 35 ml puff having a two-second duration.

It has been found that in order to achieve such delivery, the heaters should be able to reach a temperature of between about 150°C and about 500°C when in contact with the flavor generating medium. Further, the heaters should consume between about 1 calorie (4·19 Joules) and about 6 calories (25·12 Joules) given the limitations of power sources.

Heaters having such characteristics preferably have a ratio of active surface area (surface area in contact with the flavor generating medium) to mass of between about 3 mm²/mg and about 6 mm²/mg, an active surface area of between about 3 mm² and about 50 mm², a mass of between about 1 mg and about 30 mg, and a resistance of between about 0.5 ohm and 3.0 ohms. More preferably, the heaters should have an active surface area of between about 3 mm² and about 20 mm² and a resistance of between about 1.0 ohm and 1.6 ohms. These requirements are interrelated, because heater power consumption is determined by resistance, which in turn is determined by resistivity and size.

The materials of which the heaters are made are chosen to assure reliable repeated uses of up to 3,600 on/off cycles without failure. The heater materials are also chosen based on their reactivities, to assure that they will not react with the flavor generating medium at any temperature likely to be encountered to form any undesired compounds. Similarly, the heaters themselves should not evolve any undesired compounds when heated out of the presence of the flavor generating medium. Alternatively, heater materials that might otherwise give rise to undesired compounds could be encapsulated in an inert heat-conducting material such as a suitable ceramic material.

Based on these criteria, preferred materials for the electric heating means of the present invention include carbon, graphite, stainless steel, tantalum, metal ceramic matrices, and metal alloys, such as aluminum alloys, iron alloys, and chromium alloys. Suitable metal-ceramic matrices include silicon carbide aluminum and silicon carbide titanium. Of the listed materials, stainless steel and the aluminum, iron or chromium alloys should be encapsulated in a suitable ceramic material because of their reactivity. Suitable ceramic materials for encapsulation include silica, alumina, and sol gels.

A particularly preferred material for use in the electrical heating means of this invention is tantalum.

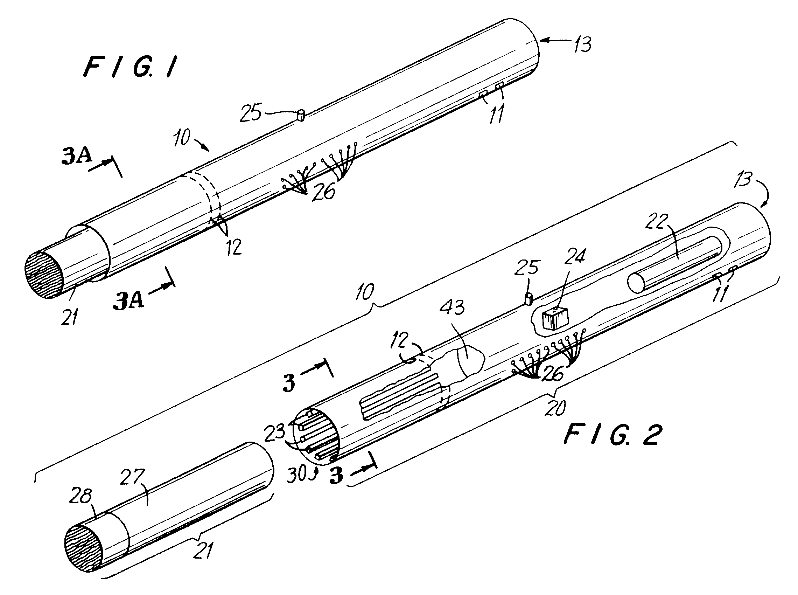

A first preferred embodiment of a flavor generating article 10 is shown in FIGS. 1-4. Article 10 includes reusable or "permanent" portion 20 and disposable filter/flavor portion or cartridge 21 which is received in a cavity 30 at the mouth end of portion 20.

Reusable portion 20 includes, at the end remote from the mouth end, a power source 22, which could include a battery, a capacitor or both. The battery could be replaceable, rechargeable or both. If the battery is rechargeable, or if power source 22 is a capacitor alone, then article 10 is provided with charging contacts 11 on its outer surface, for connection to an external power supply (not shown) for charging power source 22. Power source 22 provides power for heating elements 23, which are energized under the control of control circuit 24, which is in turn actuated by pushbutton 25 or by a puff-actuated sensor (not shown). Indicators 26, which could be light-emitting diodes or other visual indicators, reflect the status of the various heaters 23. The functions of power source 22, control circuit 24, pushbutton 25 (or a puff-actuated sensor), and indicators 26 are described in more detail in EP-A-0430566 referred to above.

Portion 20 is preferably covered by cigarette wrapping paper 31, to give it the appearance of a conventional cigarette. Perforations 12 may be provided in the wall of portion 20 to allow outside air to be drawn in during puffing, or outside air may be drawn through all of portion 20 via openings (not shown) at its far end 13.

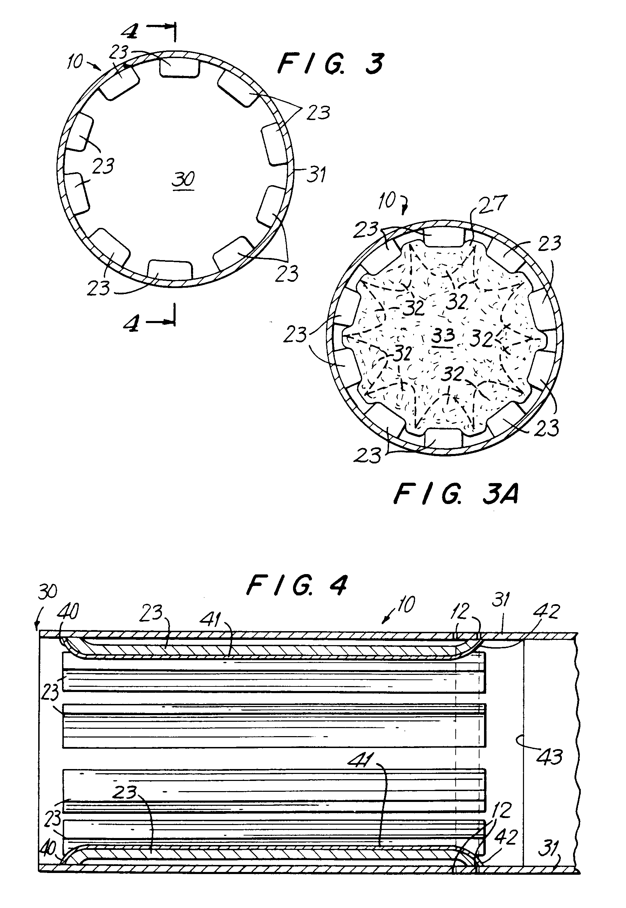

In this embodiment, heating elements 23 are linear, extending from a point slightly spaced away from the mouth end of cavity 30 to a point slightly spaced away from the rod end of cavity 30. As seen in FIG. 4, heating elements 23 are bowed slightly away from the wall of cavity 30, for reasons to be discussed below. At one of the two ends, all of heating elements 23 are connected in common to ground, while at the other end each element 23 is connected separately to control circuitry 24 for individual actuation of heating elements 23. The curvature of ends 40 of heating elements 23 at the mouth end of cavity 30 provides a lead-in for the insertion of disposable portion 21. Heating elements 23 are preferably distributed substantially uniformly around the circumference of cavity 30, and should preferably be spaced apart sufficiently that the regions of disposable portion 21 heated by neighboring heating elements 23 do not overlap, which could lead to reheating and the production of undesired compounds and off tastes.

Disposable portion 21 preferably includes a flavor segment 27 and a filter segment 28, attached by a plug wrap or other fastening means (not shown). Filter segment 28 is preferably a conventional cellulose acetate filter segment, and preferably is very short, being provided mostly for the sake of appearance and to give article 10 a "mouth feel" similar to a conventional cigarette.

Flavor segment 27 can be any material that liberates flavors when hot air passes over or through it. Preferably, flavor segment 27 is a cylindrical portion of an extruded open-cell foamed tobacco product of the kind described in commonly-assigned United States Patent No. 4,510,950, which is hereby incorporated by reference in its entirety, except that approximately 10% of an aerosol precursor such as glycerine is added to the composition. It is desirable to add an aerosol precursor to deliver the flavor-containing substance as an aerosol, so that when the consumer exhales the flavor-containing substance, the visible condensed aerosol may mimic the appearance of cigarette smoke.

The diameter of filter/flavor portion 21 is at most equal to the inner diameter of cavity 30, and should be at least somewhat greater than the diameter of the cylindrical space between heating elements 23, which are bowed out from the wall of cavity 30 as discussed above, so that elements 23 press into flavor segment 27 for intimate thermal contact. To that end, flavor segment 27 should be firm but compressible. The open-cell foamed structure described in above-incorporated Patent No. 4,510,950 is particularly well-suited for that purpose, but other compressible structures may be used.

The compression of flavor segment 27 by heating elements 23 is illustrated in FIG. 3A, which shows a radial cross-sectional view of article 10 with disposable portion 21 inserted. FIG. 3A also shows regions 32 of flavor segment 27 adjacent heaters 23, each region 32 representing that fraction of segment 27 that is heated by each respective heater 23 to provide an individual charge of flavor-containing substance.

The length of portion 21 is preferably such that some part of filter segment 28 protrudes from cavity 30 to aid removal of spent portions 21. However, portion 21 could be inserted flush into cavity 30, and a separate ejection mechanism (not shown) could be provided. Whatever length portion 21 is made, the relative lengths of segments 27, 28 preferably should be such that all of filter segment 28 is closer to the mouth end of cavity 30 than the ends 40 of heating elements 23, so that no energy is wasted heating filter segment 28.

As discussed above, a wiping action cleans residue from previous uses off heating elements 23 as each new disposable portion 21 is inserted, and that preferably is aided by smooth surface finish 41 on the surface of heating elements 23. (Although drawn separately from elements 23, surface finish 41 need not be, and preferably is not, a separate layer.) The resilience of firm but compressible portion 21 assures firm contact for the wiping action. Preferably also, the ends 42 of heating elements 23 remote from the mouth end are connected to the side wall of cavity 30 adjacent to, but spaced away from, end wall 43 of cavity 30. That allows the residue that is wiped off heating elements 23 to be pushed past ends 42 of heating elements 23 so that residue is not reheated.

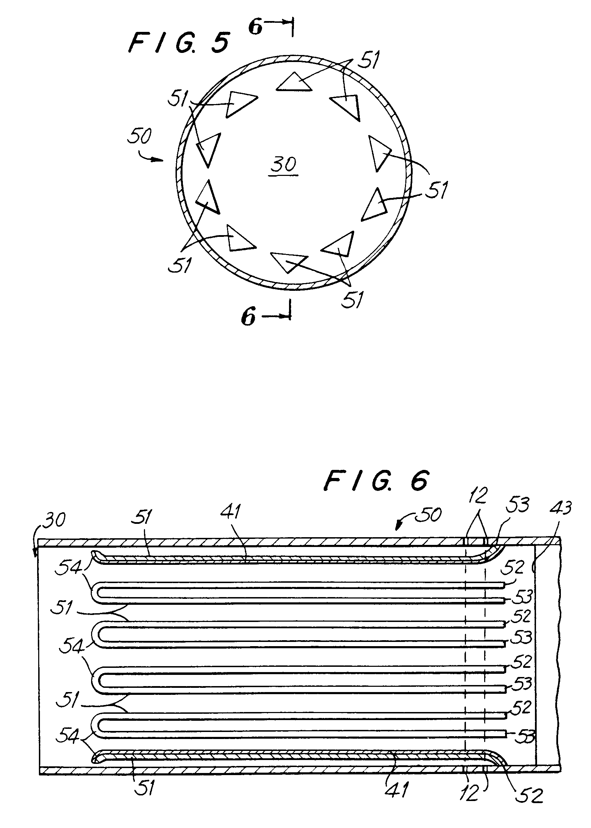

As discussed above, in embodiment 10 of FIGS. 1-4, the electrical connections to heating elements 23 are made at both ends 40, 42 thereof, requiring the extension of wires or other conductors to the mouth end of cavity 30. That requirement is eliminated in a more particularly preferred embodiment 50, which is identical to embodiment 10 except for the arrangement of heating elements 51 as illustrated in FIGS. 5 and 6.

Each heating element 51 is in the shape of an elongated "U", each having both of its ends 52, 53 connected to the side wall of cavity 30 adjacent end wall 43 of cavity 30. Each respective end 52 is individually connected to control circuitry 24 for individual actuation of heating elements 51, while ends 53 are connected in common to ground. While ends 54 adjacent the mouth end of cavity 30 are not electrically connected, and thus need not touch the side wall of cavity 30, they are nonetheless turned toward the side wall of cavity 30, as shown in both FIGS. 5 and 6, to provide a lead-in for disposable portion 21 as discussed above. It should be noted that in FIG. 6, the uppermost and lowermost elements 51 are shown cut through their U-shaped tips 54.

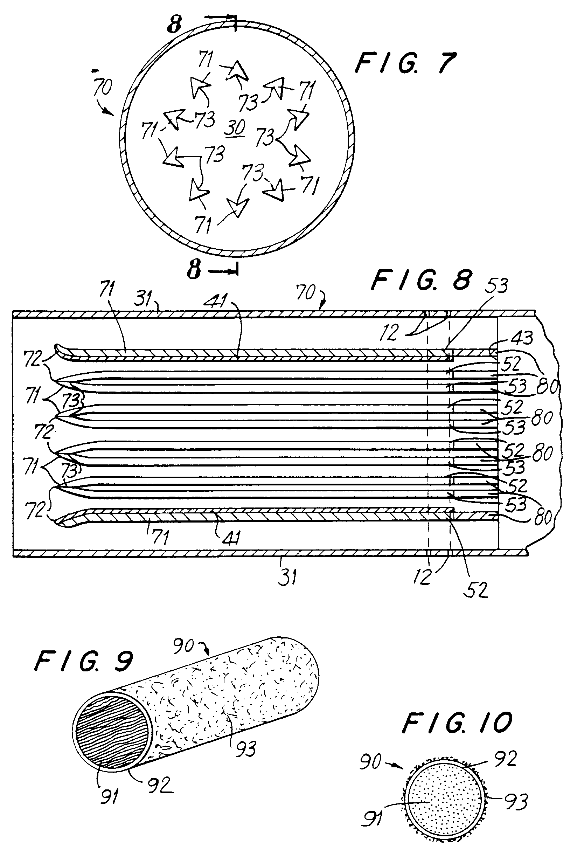

In another embodiment 70 shown in FIGS. 7 and 8, heating elements 71 are spaced somewhat further from the wall of cavity 30, and each is provided with a somewhat sharper "V" tip 72, as well as with fold 73 to increase their rigidity. In this way, heating elements 71 actually pierce and extend into disposable portion 21 to provide the desired intimate thermal contact. The open-cell foam structure described above is particularly well-suited for such an embodiment. In this embodiment, because heating elements 71 are spaced further from the side wall of cavity 30, ends 52, 53 are not attached to the side wall of cavity 30, but to its end wall 43. Preferably, the connections of ends 52, 53 to end wall 43 are made through spacers 80 which are not conductive of either heat or electricity. In this way, the wiping action referred to above wipes residue past ends 52, 53 and onto spacers 80, where the residues are not reheated.

An alternative embodiment of flavor segment 27 of disposable portion 21 is shown in FIGS. 9 and 10. Flavor segment 90 includes a fiber bundle 91 around which is wrapped a layer 92 of metallic foil, such as aluminum foil, onto which has been coated a slurry 93 of flavor generating medium. Fiber bundle 91 gives segment 90 the necessary compressibility. This alternative avoids the inefficient use of tobacco that occurs in segment 27, where the tobacco foam region 33 (FIG. 3A) in the center of segment 27 provides bulk and compressibility but is never heated to deliver flavor to the consumer. Furthermore, if this embodiment 90 is used, fiber bundle 91 could be made of cellulose acetate or other suitable filter material, and could be extended to form filter segment 28, thereby providing disposable portion 21 as a unitary body.

Thus it is seen that an electrically heated flavor generating article is provided in which the heating elements are reusable, and of which all disposable portions can be biodegradable. In addition, electrical contact resistance between the heaters and the source of electrical energy is eliminated, as the heaters are permanently attached.

## Claims

1. An article for delivering to a consumer an inhalable flavor-containing substance, comprising electrical heating means (23;51;71) disposed in a cavity (30), a source of electrical energy (22) for powering the electrical heating means, control means (24) for controlling the heating of the electrical heating means by the source (22), and a removable portion of flavor generating medium (21) received in the cavity (30) in proximity to the electrical heating means, characterised by a plurality of electrical heating means controlled by the control means to heat at any one of a pre-determined number of times, at least one but fewer than all of the electrical heating means, and in that on activation of any one of the electrical heating means (23;51;71) a respective fraction of the removable portion of flavor generating medium in contact therewith is heated, delivering a predetermined quantity of flavor-containing substance to the consumer.

2. An article according to Claim 1, wherein the removable portion of flavor generating medium contains a sufficient quantity of flavor generating medium for delivery of the predetermined quantity of flavor containing substance to the consumer by a single activation of each electrical heating means after which the removable portion is spent and is replaceable by the consumer.

3. An article according to Claim 1 or 2, wherein the cavity (30) and the removable portion (21) are substantially cylindrical and of substantially equal diameter.

4. An article according to Claim 3, wherein the removable portion (21) is longer than the cavity (30) and, in position has an end protruding there from providing a grip for the consumer for insertion and removal.

5. An article according any of claims 1 to 4, wherein each electrical heating means (23;51) protrudes into the cavity, and the removable portion is compressible, whereby the electrical heating means are adjacent the removable portion in the cavity and compress the removable portion to provide intimate thermal contact therebetween.

6. An article according to any of Claims 1 to 4, wherein each electrical heating means protrudes (71) into the cavity, and the removable portion is compressible whereby the electrical heating means extend into said removable portion, providing intimate thermal contact therebetween.

7. An article according to any preceding claim, wherein the cavity (30) has an insertion end through which the removable portion (21) is inserted and a far end remote from said insertion end, and insertion of the removable portion into the cavity, wipes from the electrical heating means (23;51;71) any residue remaining from a previously heated removable portion.

8. An article according to Claim 7, wherein each of the electrical heating means (23;51;71) is spaced from the far end, whereby on insertion of the removable portion into the cavity, the residue is wiped beyond the electrical heating means in the direction of the far end.

9. An article according to any preceding claim, wherein the flavor generating medium comprises an extruded tobacco material.

10. An article according to Claim 9, wherein the extruded tobacco material is a tobacco foam material.

11. An article according to Claim 10, wherein the tobacco foam material is an open-cell foam.

12. The article of any preceding claim, wherein the flavor generating medium comprises an aerosol-forming material, which on heating forms an aerosol.

13. The article of Claim 12, wherein the aerosol-forming material comprises glycerine.

14. The article of Claim 12 or 13, wherein said aerosol-forming material comprises water.

15. An article according to any of Claims 9 to 14, wherein said flavor generating medium comprises tobacco and an aerosol-forming material, and on heating the flavor generating medium an aerosol comprising tobacco components is formed.

16. An article according to Claim 15, wherein the flavor generating medium further comprises tobacco solubles.

17. An article according to any preceding claim, wherein the electrical heating means has a resistance of between about 0.5 ohms and about 3.0 ohms.

18. An article according to Claim 17, wherein the electrical heating means has a resistance of between about 1.0 ohms and 1.6 ohms.

19. An article according to any preceding claim, wherein the electrical heating means produces a temperature of between about 150°C and about 500°C when in contact with the flavor generating medium.

20. An article according to any preceding claim, wherein the electrical heating means consumes between about 1 calorie (4.10 Joules) and about 6 calories (25:12 Joules) each time it is heated.

21. An article according to any preceding claim, wherein the electrical heating means has a ratio of active surface area to mass of between about 3 mm²/mg and about 6 mm²/mg.

22. An article according to Claim 21, wherein the electrical heating means has an active surface area of between 3mm² and about 50 mm², and a mass of between 1 mg and about 30 mg.

23. An article according to Claim 22, wherein the electrical heating means has an active surface area of between about 3 mm² and about 20 mm².

24. An article according to any preceding claim, wherein the electrical heating means comprises a material selected from the group consisting of carbon, graphite, stainless steel, tantalum, metal ceramic matrices, and metal alloys.

25. An article according to Claim 24, wherein the metal alloys are selected from the group consisting of aluminium alloys, iron alloys, and chromium alloys.

26. An article according to Claim 24, wherein the metal ceramic matrices are selected from the group consisting of silicon carbide aluminium, silicon carbide titanium, and mixtures thereof.

27. An article according to Claim 24, wherein the material comprises tantalum.

28. An article according to Claim 25, wherein the material is encapsulated in a ceramic coating.

29. An article according to any preceding claim, wherein the removable portion has a mouth end and a rod end, the removable portion (21) further comprising a filter at the mouth end.

30. An article for delivering to a consumer an inhalable flavor containing substance, comprising a plurality of electrical heating elements (23;51;71) disposed in a cavity (30) in the article, an electrical energy source (22) for powering the heating elements, control means (24) for controlling the heating of the heating elements by the power source to heat at least one, but not all the elements a predetermined number of times, and a flavor generating medium removably received in the cavity and arranged proximate the heating elements, whereby heating of the elements by the power source releases a predetermined quantity of flavor containing substance from the portion of the flavor generating medium in contact with the one or more elements heated, to the consumer.

## Patentansprüche

1. Artikel zur Abgabe einer von einem Verbraucher inhalierbaren, ein Aroma enthaltenden Substanz, mit einer elektrischen Heizeinrichtung (23; 51; 71), die in einem Hohlraum (30) angeordnet ist, einer elektrischen Energiequelle (22) zur Stromversorgung der elektrischen Heizeinrichtung, einer Steuereinrichtung (24) zur Steuerung des Heizvorganges der elektrischen Heizeinrichtung durch die Quelle (22) und mit einem entfernbaren Abschnitt eines das Aroma erzeugenden Mediums (21), der in dem Hohlraum (30) in der Nähe der elektrischen Heizeinrichtung aufgenommen ist, gekennzeichnet durch eine Vielzahl von elektrischen Heizvorrichtungen, die durch die Steuereinrichtung gesteuert werden, um irgendeine der elektrischen Heizvorrichtungen eine vorbestimmte Anzahl von Malen und zwar wenigstens eine, jedoch weniger als alle der elektrischen Heizvorrichtungen aufzuheizen, wobei bei Aktivierung irgendeiner der elektrischen Heizvorrichtungen (23; 51; 71) einjeweiliger Bruchteil des entfernbaren Abschnitts des das Aroma erzeugenden Mediums, welcher damit in Berührung stet, erhitzt wird und eine vorbestimmte Menge der das Aroma enthaltenden Substanz an den Verbraucher abgibt.

2. Artikel nach Anspruch 1, bei dem der entfernbare Abschnitt des das Aroma erzeugenden Mediums eine ausreichende Menge des das Aroma erzeugenden Mediums enthält, um die vorbestimmte Menge der das Aroma enthaltenden Substanz an den Verbraucher durch eine einzelne Aktivierung jeder elektrischen Heizvorrichtung abzugeben, wonach der entfernbare Abschnitt verworfen wird und von dem Verbraucher ersetzbar ist.

3. Artikel nach Anspruch 1 oder 2, bei dem der Hohlraum (30) und der entfernbare Abschnitt (21) im wesntlichen zylindrisch gestaltet sind und im wesntlichen gleichen Durchmesser haben.

4. Artikel nach Anspruch 3, bei dem der entfernbare Abschnitt (21) länger ausgebildet ist als der Hohlraum (30) und in Lage gebracht ein Ende aufweist, welches daraus hervorragt und einen Handgriff zum Einschieben und Entfernen für den Verbraucher bildet.

5. Artikel nach irgendeinem der Ansprüche 1 bis 4, bei dem jede elektrische Heizvorrichtung (23; 51) in den Hohlraum hineinragt und bei dem der entfernbare Abschnitt zusammendrückbar ist, wobei die elektrischen Heizvorrichtungen benachbart dem entfernbaren Abschnitt in dem Hohlraum angeordnet sind und den entfernbaren Abschnitt zusammendrücken, um dadurch dazwischen einen ausgeprägten thermischen Kontakt herzustellen.

6. Artikel nach irgendeinem der Ansprüche 1 bis 4, bei dem jede elektrische Heizvorrichtung (71) in den Hohlraum hineinragt und der entfernbare Abschnitt zusammendrückbar ist, wobei sich die elektrische Heizvorrichtung in den entfernbaren Abschnitt hinein erstreckt, um dadurch einen ausgeprägten thermischen Kontakt dazwischen herzustellen.

7. Artikel nach irgendeinem der vorhergehenden Ansprüche, bei dem der Hohlraum (30) ein Einschubende aufweist, über welches der entfernbare Abschnitt (21) einschiebbar ist, und ein ablegendes Ende, welches von dem Einschubende entfernt gelegen ist, besitzt und wobei das Einschieben des entfernbaren Abschnitts in den Hohlraum von den elektrischen Heizvorrichtungen (23; 51; 71) jeglichen Rückstand abwischt, der von einem früher erhitzten entfernbaren Abschnitt zurückgeblieben ist.

8. Artikel nach Anspruch 7, bei dem jede der elektrischen Heizvorrichtungen (23; 51; 71) von dem abliegenden Ende beabstandet ist, wobei bei Einschieben des entfernbaren Abschnitts in den Hohlraum der Rückstand über die elektrischen Heizvorrichtungen in Richtung des abliegenden Endes abgewischt wird.

9. Artikel nach irgendeinem der vorhergehenden Ansprüche, bei dem das das Aroma erzeugende Medium ein extrudiertes Tabakmaterial aufweist.

10. Artikel nach Anspruch 9, bei dem das extrudierte Tabakmaterial aus einem Tabakschaummaterial besteht.

11. Artikel nach Anspruch 10, bei dem das Tabakschaummaterial aus einem Schaum mit offenen Zellen besteht.

12. Artikel nach irgendeinem der vorhergehenden Ansprüche, bei dem das das Aroma erzeugende Medium ein Aerosol bildendes Material enthält, welches bei Erhitzung ein Aerosol erzeugt.

13. Artikel nach Anspruch 12, bei dem das das Aerosol erzeugende Material Glyzerin aufweist.

14. Artikel nach Anspruch 12 oder 13, bei dem das das Aerosol erzeugende Material Wasser enthält.

15. Artikel nach irgendeinem der Ansprüche 9 bis 14, bei dem das das Aroma erzeugende Medium Tabak und ein Aerosol erzeugendes Material aufweist und bei Erhitzen des das Aroma erzeugenden Mediums ein Aerosol gebildet wird, welches Tabakkomponenten enthält.

16. Artikel nach Anspruch 15, bei dem das das Aroma erzeugende Medium ferner Tabak-Lösungsmittel enthält.

17. Artikel nach irgendeinem der vorgehenden Ansprüche, bei dem die elektrische Heizvorrichtung einen Widerstand zwischen ca 0,5 Ohm und ca 3,0 Ohm aufweist.

18. Artikel nach Anspruch 17, bei dem die elektrische Heizvorrichtung einen Widerstand zwischen ca 1,0 Ohm und 1,6 Ohm aufweist.

19. Artikel nach irgendeinem der vorhergehenden Ansprüche, bei dem die elektrische Heizvorrichtung eine Temperatur zwischen ca 150°C und ca 500°C erzeugt, wenn sie in Kontakt mit dem das Aroma erzeugenden Medium steht.

20. Artikel nach irgendeinem der vorhergehenden Ansprüche, bei dem die elektrische Heizvorrichtung zwischen ca 1 Kalorie (4 .10 Joules) und ca 6 Kalorien (25:12 Joules) jedesmal verbraucht, wenn sie erhitzt wird.

21. Artikel nach irgendeinem der vorhergehenden Ansprüche, bei dem die elektrische Heizvorrichtung ein Verhältnis des aktiven Oberflächenbereiches zur Masse zwischen ca 3 mm²/mg und ca 6 mm²/mg aufweist.

22. Artikel nach Anspruch 21, bei dem die elektrische Heizvorrichtung einen aktiven Oberflächenbereich zwischen 3 mm² und ca 50 mm² besitzt und eine Masse zwischen 1mg und ca 30 mg aufweist.

23. Artikel nach Anspruch 22, bei dem die elektrische Heizvorrichtung einen aktiven Oberflächenbereich zwischen ca 3 mm² und ca 20 mm² besitzt.

24. Artikel nach irgendeinem der vorhergehenden Ansprüche, bei dem die elektrische Heizvorrichtung ein Material enthält, welches aus der Gruppe, bestehend aus Kohlenstoff, Graphit, rostfreiem Stahl, Tantal, Metallkeramik-Matrizen und Metall-Legierungen, ausgewählt ist.

25. Artikel nach Anspruch 24, bei dem die Metall-Legierungen aus der Gruppe ausgewählt sind, die aus Aluminium-Legierungen, Eisen-Legierungen und Chrom-Legierungen bestehen.

26. Artikel nach Anspruch 24, bei dem die Metallkeramik-Matrizen aus der Gruppe ausgewählt sind, die aus Siliziumkarbid-Aluminium, Siliziumkarbid-Titan und Mischungen davon besteht.

27. Artikel nach Anspruch 24, bei dem das Material Tantal enthält.

28. Artikel nach Anspruch 25, bei dem das Material in einen Keramiküberzug eingekapselt ist.

29. Artikel nach irgendeinem der vorhergehenden Ansprüche, bei dem der entfernbare Abschnitt ein Mundende und ein Stabende aufweist, wobei der entfernbare Abschnitt (21) ferner ein Filter an dem Mundende aufweist.

30. Artikel zum Abgeben einer inhalierbaren, ein Aroma enthaltenden Substanz an einen Verbraucher, mit einer Vielzahl von elektrischen Heizelementen (23; 51; 71), die in einem Hohlraum (30) in dem Artikel angeordnet sind, einer elektrischen Energiequelle (22) für die Stromversorgung der Heizelemente, einer Steuereinrichtung (24) zum Steuern des Heizvorganges der Heizelemente durch die Energiequelle, um wenigstens eines, jedoch nicht alle der Elemente eine bestimmte Anzahl von Malen zu erhitzen, und mit einem ein Aroma erzeugenden Medium, welches in dem Hohlraum entfernbar aufgenommen ist und dicht bei den Heizelementen angeordnet ist, wodurch das Aufheizen der Elemente durch die Energiequelle eine vorbestimmte Menge der das Aroma enthaltenden Substanz aus dem Abschnitt des das Aroma erzeugenden Mediums für den Verbraucher freisetzt, der in Berührung mit dem einen oder mehreren erhitzten Elementen steht.

## Revendications

1. Article destiné à délivrer à un consommateur une substance comportant un arôme inhalable, comportant des moyens de chauffage électrique (23; 51; 71) agencés dans une cavité (30), une source (22) d'énergie électrique destinée à alimenter les moyens de chauffage électrique, des moyens de commande (24) destinés à commander le chauffage des moyens de chauffage électrique par la source (22), et une partie amovible constituant un support délivrant un arôme (21) reçu dans la cavité (30) à proximité des moyens de chauffage électrique, caractérise en ce qu'il comporte plusieurs moyens de chauffage électrique commandés par les moyens de commande pour chauffer à chaque fois d'un nombre prédéterminé de fois, au moins un moyen de chauffage électrique mais pas tous les moyens de chauffage électrique, et en ce que, lors de l'activation de l'un quelconque des moyens de chauffage électrique (23; 51; 71), un fragment respectif de la partie amovible du support délivrant un arôme en contact avec celui-ci est chauffé en délivrant au consommateur une quantité prédéterminée de substance comportant un arôme.

2. Article selon la revendication 1, dans lequel la partie amovible du support délivrant un arôme comporte une quantité suffisante de support délivrant un arôme pour délivrer la quantité prédéterminée de substance comportant un arôme au consommateur par activation unique de chaque moyen de chauffage électrique après quoi la partie amovible est usée et peut être remplacée par le consommateur.

3. Article selon la revendication 1 ou 2, dans lequel la cavité (30) et la partie amovible (21) sont à peu près cylindriques et de diamètre à peu près égal.

4. Article selon la revendication 3, dans lequel la partie amovible (21) est plus longue que la cavité (30) et, en position, a une extrémité faisant saillie à partir de celle-ci pour fournir au consommateur une préhension pour l'insertion et l'enlèvement.

5. Article selon l'une quelconque des revendications 1 à 4, dans lequel chaque moyen de chauffage électrique (23; 51) fait saillie à l'intérieur de la cavité, et la partie amovible est compressible, de sorte que les moyens de chauffage électrique sont adjacents à la partie amovible dans la cavité et compriment la partie amovible pour fournir un très bon contact thermique entre ceux-ci.

6. Article selon l'une quelconque des revendications 1 à 4, dans lequel chaque moyen de chauffage électrique fait saillie (71) à l'intérieur de la cavité, et la partie amovible est compressible de sorte que les moyens de chauffage électrique s'étendent à l'intérieur de ladite partie amovible, fournissant un très bon contact thermique entre ceux-ci.

7. Article selon l'une quelconque des revendications précédentes, dans lequel la cavité (30) a une extremité d'insertion à travers laquelle la partie amovible (21) est insérée et une extrémité éloignée de ladite extrémité d'insertion, et l'insertion de la partie amovible à l'intérieur de la cavité balaye des moyens de chauffage électrique (23; 51; 71) tout résidu restant de la partie amovible chauffée antérieurement.

8. Article selon la revendication 7, dans lequel chacun des moyens de chauffage électrique (23; 51; 71) est espacé de l'extrémité éloignée, de sorte que lors de l'insertion de la partie amovible à l'intérieur de la cavité, les résidus sont balayés au-delà des moyens de chauffage électrique dans la direction de l'extrémité éloignée.

9. Article selon l'une quelconque des revendications précédentes, dans lequel le support délivrant un arôme comporte une matériau extrudé de tabac.

10. Article selon la revendication 9, dans lequel le matériau extrudé de tabac est un matériau en mousse de tabac.

11. Article selon la revendication 10, dans lequel le matériau en mousse de tabac est une mousse à cellules ouvertes.

12. Article selon l'une quelconque des revendications précédentes, dans lequel le support délivrant un arôme comporte un matériau de formation d'aérosol, qui, lorsqu'il est chauffé, forme un aérosol.

13. Article selon la revendication 12, dans lequel le matériau de formation d'aérosol est constitué de glycérine.

14. Article selon la revendication 12 ou 13, dans lequel ledit matériau de formation d'aérosol est constitué d'eau.

15. Article selon l'une quelconque des revendications 9 à 14, dans lequel ledit support délivrant un arôme est constitué de tabac et d'un matériau de formation d'aérosol, et, lors du chauffage du support délivrant un arôme, est formé un aérosol comportant des composants de tabac.

16. Article selon la revendication 15, dans lequel le support délivrant un arôme comporte en outre des solutions de tabac.

17. Article selon l'une quelconque des revendications précédentes, dans lequel les moyens de chauffage électrique ont une résistance comprise entre environ 0,5 ohm et environ 3,0 ohms.

18. Article selon la revendication 17, dans lequel les moyens de chauffage électrique ont une résistance comprise entre environ 1,0 ohm et 1,6 ohms.

19. Article selon l'une quelconque des revendications précédentes, dans lequel les moyens de chauffage électrique fournissent une température comprise entre environ 150°C et environ 500°C lorsqu'ils sont en contact avec le support délivrant un arôme.

20. Article selon l'une quelconque des revendications précédentes, dans lequel les moyens de chauffage électrique consomment entre environ 1 calorie (4,10 Joules) et environ 6 calories (25,12 Joules) à chaque fois qu'ils sont chauffés.

21. Article selon l'une quelconque des revendications précédentes, dans lequel les moyens de chauffage électrique ont un rapport de surface superficielle active par rapport à la masse compris entre environ 3 mm²/mg et environ 6 mm²/mg.

22. Article selon la revendication 21, dans lequel les moyens de chauffage électrique ont une surface superficielle active comprise entre 3 mm² et environ 50 mm², et une masse comprise entre 1 mg et environ 30 mg.

23. Article selon la revendication 22, dans lequel les moyens de chauffage ont une surface superficielle active comprise entre environ 3 mm² et environ 20 mm².

24. Article selon l'une quelconque des revendications précédentes, dans lequel les moyens de chauffage électrique comportent un matériau choisi parmi le groupe constitué du carbone, du graphite, de l'acier inoxydable, du tantale, d'une matrice en céramique-métal, et d'alliages métalliques.

25. Article selon la revendication 24, dans lequel les alliages métalliques sont choisis parmi le groupe constitué des alliages d'aluminium, des alliages de fer, et des alliages de chrome.

26. Article selon la revendication 24, dans lequel les matrices en céramique-métal sont choisies parmi le groupe constitué de l'aluminium au carbure de silicium, du titane au carbure de silicium, et des mélanges de ceux-ci.

27. Article selon la revendication 24, dans lequel le matériau est constitué de tantale.

28. Article selon la revendication 25, dans lequel le matériau est encapsulé dans un revêtement en céramique.

29. Article selon l'une quelconque des revendications précédentes, dans lequel la partie amovible a une extrémité formant embouchure et une extrémité formant tige, la partie amovible (21) comporte en outre un filtre situé au niveau de l'extrémité formant embouchure.

30. Article destiné à délivrer à un consommateur une substance comportant un arôme inhalable, comportant plusieurs éléments de chauffage électrique (23; 51; 71) agencés dans une cavité (30) existant dans l'article, une source d'énergie électrique (22) destinée à alimenter les éléments de chauffage, des moyens de commande (24) destinés à commander le chauffage des éléments de chauffage par la source d'énergie pour chauffer au moins un, mais pas tous les éléments, un nombre prédéterminé de fois, et un support délivrant un arôme reçu de manière amovible dans la cavité et agencé à proximité des éléments de chauffage, de sorte que le chauffage des éléments par la source d'énergie libère pour le consommateur une quantité prédéterminée de substance comportant un arôme à partir de la partie du support délivrant un arôme en contact avec un ou plusieurs éléments chauffés.
